# EUROPÄISCHE PATENTANMELDUNG

(11) **EP 1 577 327 A1**
(43) Veröffentlichungstag der Anmeldung: **21.09.2005**
(21) Anmeldenummer: 04006641.7
(22) Anmeldetag: 19.03.2004
(51) Int. Cl.: C08F 8/14, C08F 8/32, C08F 8/48, C04B 24/26, C04B 24/32

(54) **Amid-und Estergruppen aufweisendes Polymer, dessen Herstellung und Verwendung**

(71) Anmelder: Sika Technology AG, 6340 Baar (CH)
(72) Erfinder: Sulser, Ueli, 8102 Oberengstringen (CH); Schober, Irene, 8008 Zürich (CH); Velten, Ulf, 5000 Aarau (CH); Krapf, Anna, 8142 Uitikon (CH)
(74) Vertreter: Isler, Jörg

(57) **Zusammenfassung**

Die vorliegende Erfindung betrifft einerseits ein Verfahren der Herstellung eines Amid- und Estergruppen aufweisenden Polymers **P**, in dem in einem ersten Schritt ein Homo- oder Copolymer **P1** von (Meth)acrylsäure mit einer Monohydroxy-Verbindung **E** bei einer Temperatur bis 200°C umgesetzt wird, so dass neben Estergruppen Anhydridgruppen entstehen, und in einem zweiten Schritt die im ersten Schritt gebildeten Anhydridgruppen mit einer Monoamin-Verbindung **A** bei Temperaturen deutlich unter 100°C umgesetzt wird.

Die Erfindung umfasst andererseits die nach diesem Verfahren hergestellten Polymere, deren Verwendung in hydraulisch abbindenden Zusammensetzungen sowie diese hydraulisch abbindende Zusammensetzungen vor und nach Erhärtung mittels Wasser.

## Beschreibung

### Technisches Gebiet

Die vorliegende Erfindung betrifft die Gruppe der Amide und Estern von Polymeren aus α- β-ungesättigten Carbonsäuren.

### Stand der Technik

Polymere aus α- β-ungesättigten Carbonsäuren mit Polyalkylenglykol-Seitenketten werden bereits seit längerem in der Betontechnologie als Verflüssiger wegen ihrer starken Wasserreduktion eingesetzt. Diese Polymere haben eine Kammpolymerstruktur. Es gibt eine Reihe von solchen Kammpolymeren, welche neben Ester- und Carbonsäure-Gruppen auch Amidgruppen aufweisen.

Für die Herstellung dieser Polymere sind im Wesentlichen zwei Verfahren im Einsatz. Entweder werden Polymere aus den jeweiligen Carbonsäure-, Ester- und Amid-funktionenellen Monomeren durch radikalische Polymerisation oder in einer sogenannten polymeranalogen Umsetzung aus einem Polycarboxylpolymer und den jeweiligen Alkoholen und Aminen hergestellt.

Der Weg über die radikalische Polymerisation ist die gängigste Methode, sie ist allerdings bei speziellen Verbindungen erschwert durch die kommerzielle Verfügbarkeit der entsprechenden Monomere und deren Giftigkeit und bedarf einer aufwändigen Prozesskontrolle.

Die polymeranaloge Umsetzung weist den grossen Vorteil auf, dass aus kommerziell erhältlichen Polymeren aus α,-β ungesättigten Carbonsäuren, speziell aus Poly(meth)acrylsäuren durch Variation der Menge, der Art und dem Verhältnis von Alkohol und Amin in einfacher und sicherer Weise sehr unterschiedliche Kammpolymere mit sehr unterschiedlichen Eigenschaften erhalten werden können. In der polymeranalogen Umsetzung fällt durch die Verwendung der kommerziell erhältlichen Poly(meth)acrylsäuren der sicherheitstechnisch kritische Schritt der radikalischen Polymerisation weg.

Solche polymeranaloge Umsetzungen sind beispielsweise in EP 0 889 860, EP 0 739 320 sowie DE 100 15 135 beschrieben.

Die polymeranaloge Umsetzung erfolgt nach dem heutigen Stand der Technik in einer säurekatalysierten Umsetzung von Carboxylgruppenenthaltenden Polymeren mit monofunktionellen, Amin- oder Hydroxylterminierten Derivaten bei Temperaturen von mindestens 140°C bis 200°C. Diese Umsetzungsbedingungen ergeben verschiedene Einschränkungen, die eine Umsetzung von tiefsiedenden primären oder sekundären Aminen verunmöglichen oder bei Verbindungen, die neben der primären oder sekundären Amingruppe noch Hydroxyl-Funktionen aufweisen, zu Vernetzungen führt.

Zum einen ist dem Fachmann bekannt, dass bei einer polymeranalogen Umsetzung von Carboxylgruppen-haltigen Polymeren die Zugabe von Verbindungen, die mehr als eine primäre oder sekundäre Amingruppe oder Verbindungen, die neben der primären oder sekundären Amingruppe noch Hydroxyl-Funktionen aufweisen zwangläufig zu einer Vernetzung der Carboxylgruppen-haltigen Polymeren führt. Eine solche Vernetzung ist jedoch nicht erwünscht, da sie zumindest zu einer Verminderung der Verflüssigungswirkung führt. Im Extremfall kann die Vernetzung auch dazu führen, dass die Reaktionsschmelze so stark vernetzt, dass sie nicht mehr aus einem Reaktor ausgebracht werden kann. Die Vernetzung kann selbst durch die Verwendung von Lösungsmitteln nicht unterdrückt werden.

Zum anderen haben viele primäre oder sekundäre Amine einen sehr niedrigen Siedepunkt und sind in der Gefahrenklassierung als explosionsgefährlich eingestuft, da sie mit Luft in bestimmten Mischverhältnissen und bei bestimmten Zündtemperaturen zu Explosionen führen können. Alle bis heute bekannten Umsetzungen gemäss einer polymeranalogen Umsetzung erfolgen entweder bei hohen Temperaturen von mind. 140°C und gegebenenfalls noch unter Anwendung von Vakuum oder Ein- beziehungsweise Überleiten eines Luft- oder Stickstoff-Stroms durch beziehungsweise über die Reaktionsmischung. Diese drastischen Bedingungen sind erforderlich, um das bei einer Kondensationsreaktion entstehende Wasser abzutrennen und damit eine vollständige Reaktion zu ermöglichen. Allerdings verunmöglichen, beziehungsweise erschweren und verteuern diese Bedingungen deutlich die Reaktion von tiefsiedenden primären oder sekundären Aminen in einer polymeranalogen Umsetzung, da die erforderlichen hohen Temperaturen meist über den Zündtemperaturen der Amine liegen. Weiterhin führt die Verwendung von Vakuum dazu, dass dadurch die ohnehin niedrigen Siedepunkte von tiefsiedenden primären oder sekundären Aminen gesenkt werden und unerwünschterweise durch das Vakuum der Reaktion entzogen werden. Die Verwendung eines Gasstromes, zur Entfernung des Reaktionswassers führt ebenfalls zu einem unerwünschten Austragen des Amins aus dem Reaktionsgefäss. Als Resultat beobachtet man eine unvollständige Reaktion, eine erhöhte Verunreinigung des Destillatwassers und eine erhöhte Belastung von Abgasfilter und Abluft.

### Darstellung der Erfindung

Aufgabe der vorliegenden Erfindung ist es daher, ein Verfahren zur Verfügung zu stellen, bei dem die Nachteile des Standes der Technik überwunden werden und tiefsiedende primäre oder sekundäre Amine oder Verbindungen, die neben der primären oder sekundären Amingruppe zusätzlich noch Hydroxylgruppen aufweisen, verwendet werden können.

Überraschenderweise wurde gefunden, dass dies durch ein Verfahren gemäss Anspruch 1 erreicht werden kann. Dieses Verfahren erlaubt es, in sicherer Weise Amid- und Estergruppen aufweisende Polymere herzustellen, wie sie mit üblichen polymeranalogen Verfahren nicht, oder nur unvollständig oder mit verminderter Qualität zugänglich, sind. Dieses Verfahren erlaubt eine Umsetzung der tiefsiedenden primären oder sekundären Amine oder von Verbindungen, die neben der primären oder sekundären Amingruppe noch Hydroxylgruppen aufweisen, und ist aus ökologischen Aspekten bezüglich Abgasen und Destillationswasser sowie aus prozesstechnischen Aspekten äusserst vorteilhaft. Die nach dem vorliegenden Verfahren hergestellten Kammpolymeren eignen sich bestens als Verflüssiger für hydraulisch abbindende Zusammensetzungen. Weiterhin hat sich überraschenderweise gezeigt, dass dank des erfindungsgemässen Verfahrens die Möglichkeit der Erzielung einer hohen Seitenkettendichte besteht sowie dass die so hergestellten Kammpolymere in Verwendung in hydraulisch abbindenden Zusammensetzungen zu einer verringerten Verzögerung des Erhärtungsvorganges sowie zu längerer Verarbeitungszeit führt. Wird die Reduktion der lonendichte im üblichen polymeranalogen Verfahren versucht, um die Eigenschaften des Polymere zu steuern, beispielsweise durch Erhöhung des Anteils der Estergruppen, kommt es ab einem bestimmten Veresterungsgrad zu sterischen Hinderung, welche die weitere Umsetzung erschwert, bis gar verunmöglicht. Durch die dadurch erhöhte thermische Belastung wird zudem die Gefahr der Polyetherspaltung erhöht, was zu unerwünschter Vernetzung der Polymeren führt.

Die Erfindung umfasst die nach diesem Verfahren hergestellten Polymere, deren Verwendung in hydraulisch abbindenden Zusammensetzungen sowie diese hydraulisch abbindende Zusammensetzungen vor und nach Erhärtung mittels Wasser. Weitere vorteilhafte Ausgestaltungen der Erfindung ergeben sich aus den Unteransprüchen.

### Wege zur Ausführung der Erfindung

Die vorliegende Erfindung betrifft einerseits ein Verfahren der Herstellung eines Amid- und Estergruppen aufweisenden Polymers **P**, in dem in einem ersten Schritt ein Homo- oder Copolymer **P1** von (Meth)acrylsäure mit einer Monohydroxy-Verbindung **E** bei einer Temperatur bis 200°C, so dass neben Estergruppen Anhydridgruppen entstehen, umgesetzt wird und in einem zweiten Schritt die im ersten Schritt gebildeten Anhydridgruppen mit einer Monoamin-Verbindung **A** bei Temperaturen deutlich unter 100 °C umgesetzt werden.

Unter "_{"}Monohydroxy-Verbindung" wird hier und im folgenden eine Substanz verstanden, die nur eine freie Hydroxylgruppe aufweist.

Unter "Monoamin-Verbindung" wird hier und im folgenden Ammoniak als Gas oder als wässrige Lösung oder eine Substanz verstanden, die nur eine freie primäre oder sekundäre Aminogruppe aufweist.

Unter "(Meth)acrylsäure" wird im gesamten vorliegenden Dokument sowohl Acrylsäure als auch Methacrylsäure verstanden.

Das Homo- oder Copolymer **P1** von (Meth)acrylsäure kann hierbei als freie Säure, als Voll- oder Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Das Homo- oder Copolymer **P1** von (Meth)acrylsäure ist vorteilhaft ein Homo- oder Copolymer von Methacrylsäure und/oder Acrylsäure und/oder Methacrylsäuresalz und/oder Acrylsäuresalz. Das Homo- oder Copolymer **P1** wird bevorzugt erhalten aus einer Homopolymerisation von (Meth)acrylsäure oder aus einer Copolymerisation von (Meth)acrylsäure mit mindestens einem weiteren Monomer, welches ausgewählt ist aus der Gruppe umfassend α- β-ungesättigte Carbonsäuren, α- β-ungesättigte Carbonsäureester, α- β-ungesättigte Carboxylate, Styrol, Ethylen, Propylen, Vinylacetat sowie Mischungen davon. Bevorzugt ist das weitere Monomer ausgewählt aus der Gruppe umfassend Methacrylsäure, Acrylsäure, Crotonsäure, Itaconsäure, Maleinsäure, Fumarsäure, sowie deren Salze, Ester und Mischungen.

Bevorzugt als Copolymer **P1** ist ein Copolymer aus Acrylsäure und Methacrylsäure sowie deren Salze oder Teilsalze. Die Salze oder Teilsalze werden hierbei typischerweise nach der radikalischen Polymerisation erhalten.

Bevorzugt als Homopolymer **P1** ist Polymethacrylsäure oder Polyacrylsäure, insbesondere Polymethacrylsäure, deren Salze oder Teilsalze. Die Salze oder Teilsalze werden hierbei typischerweise nach der radikalischen Polymerisation erhalten.

**P1** ist bevorzugt ein Homopolymer.

Das Homo- oder Copolymer **P1** von (Meth)acrylsäure wird durch eine radikalische Polymerisation nach üblichen Verfahren erhalten. Sie kann in Lösungsmittel, bevorzugt in Wasser ,oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Die Polymerisation erfolgt vorteilhaft unter derartigen Bedingungen, dass das gebildeten Homo- oder Copolymere **P1** aus 10 bis 250, bevorzugt 20 bis 100, mehr bevorzugt 25 bis 80, Monomerbausteinen aufgebaut ist. Solche Homo- oder Copolymer **P1** von (Meth)acrylsäure sind kommerziell erhältlich.

Die Monohydroxy-Verbindung **E** ist bevorzugt ein C6- bis C20-Alkylalkohol oder weist die Formel (I) auf

HO-[(EO)ₓ-(PO)_{y}-(BuO)_{z}]-R¹ (I)

Die Indices x, y, z stellen hierbei unabhängig voneinander je die Werte 0 - 250 dar und deren Summe x+y+z ist 3 bis 250. Weiterhin bedeutet in Formel (I) EO=Ethylenoxy, PO=Propylenoxy, BuO=Butylenoxy oder Isobutylenoxy. Die Reihenfolge der EO-, PO-, BuO-Bausteine kann in irgendeiner möglichen Sequenz vorhanden sein. Schliesslich bedeutet der Substituent R¹ eine Alkylgruppe mit 1-20 Kohlenstoffatomen oder eine Alkylarylgruppe mit 7 - 20 Kohlenstoffatomen.

Bevorzugt sind Monohydroxy-Verbindung **E** der Formel (I), insbesondere mit einer Methyl-, Ethyl-, i-Propyl- oder n-Butylgruppe als Substituent R¹ sowie mit z=0. Bevorzugt handelt es sich bei **E** um Mischpolymerisate aus EO/PO, mehr bevorzugt um einseitig endgruppenverschlossenes Polyethylenglykol.

Mischungen mehrerer unterschiedlicher Verbindungen der Gruppe E sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymereren aus Ethylenoxid und Propylenoxid oder einseitig endgruppenverschlossenen Polypropylenglykolen verwendet werden. Ebenso sind beispielsweise auch Mischungen von C6- bis C20-Alkylalkoholen und einseitig endgruppenverschlossenen Polyethylenglykolen möglich.

In einer bevorzugten Ausführungsform ist die Monohydroxy-Verbindung **E** ein einseitig endgruppenverschlossenes Polyalkylenglykol mit einem Molekulargewicht M_{w} von 300 bis 10'000 g/mol, insbesondere von 500 bis 5000 g/mol, bevorzugt von 800 bis 3000 g/mol.

In einem ersten Schritt erfolgt die Umsetzung des Homo- oder Copolymeren **P1** mit der Monohydroxy-Verbindung **E** bei einer Temperatur von bis 200°C. Die Temperatur für diese Umsetzung ist bevorzugt zwischen 140°C und 200°C. Die Reaktion ist aber auch bei Temperaturen zwischen 150°C und 175°C möglich. Eine derart hohe Temperatur ist nötig, um eine effiziente Veresterung zu erhalten.

In einer bevorzugten Ausführungsform wird dieser erste Schritt in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.

In einer Ausführungsform wird im ersten Schritt zusätzlich zur Monohydroxy-Verbindung **E** eine Monoamin-Verbindung **A'** eingesetzt. Dadurch erfolgt neben der Bildung von Ester- und Anhydridgruppen bereits im ersten Schritt die Bildung von Amidgruppen. Die Monoamin-Verbindung **A'** weist einen Siedepunkt und Flammpunkt auf, der höher liegt als die Reaktionstemperatur des ersten Schrittes. Weiterhin darf die Monoamin-Verbindung **A'** keine Hydroxylgruppen enthalten.

Typische Beispiele solcher Monoamin-Verbindungen **A'** lassen sich durch die Formel (II') darstellen

R^{2'}NH-R^{3'} (II')

Einerseits können R^{2'} und R^{3'} zusammen einen Ring bilden, der gegebenenfalls Sauerstoff-, Schwefel- oder weitere Stickstoffatome enthält.

Beispiele für solche Monoamin-Verbindungen **A'** sind 9H-Carbazol, Indolin oder Imidazol.

Andererseits können R^{2'} und R^{3'} unabhängig von einander eine Alkylgruppe mit 8 bis 20 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Verbindung der Formel (III'), (IV') oder (V') oder H darstellen.

-R^{4'}-X(R^{5'})ᵥ (III')

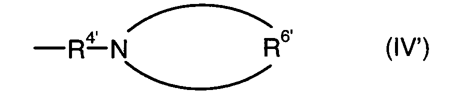

-[(EO)ₓ-(PO)_{y}-(BuO)_{z}]-R¹ (V')

R^{4'} stellt hierbei eine C1- bis C4-Alkylengruppe dar. R^{5'} stellt eine C₁-bis C₄-Alkylgruppe dar. X = S, O oder N, und v = 1 für X = S oder O, oder v=2 für X = N dar. R^{6'} stellt eine Alkylengruppe, mit gegebenenfalls Heteroatomen, dar und bildet mit dem Stickstoffatom einen 5-er- bis 8-er-Ring, insbesondere einen 6-er-Ring. Der Substituent R¹ und die Indizes x, y und z weisen die Bedeutungen auf, wie sie bereits für die Verbindung der Formel (I) definiert wurden.

Beispiele für solche Monoamin-Verbindungen **A'** sind Dioctylamin, Distearylamin, Ditalgfettamin, Fettamine wie Stearylamin, Cocosfettamin, Octadecylamin, Talgfettamin, Oleylamin; 3-Butoxy-propylamin, Bis(2-methoxyethyl)-amin; α-Methoxy-ω-Amino-Polyoxyethylen, α-Methoxy-ω-Amino-Polyoxypropylen, α-Methoxy-ω-Amino-Oxyethylene-Oxypropylen-Copolymer.

Bevorzugt ist die Monoamin-Verbindungen **A'** ein primäres Monoamin. Besonderes bevorzugt als Monoamin-Verbindungen **A'** sind Verbindungen der Formel (II') mit R^{2'} gleich der Formel (IV') und R^{3'} gleich H, insbesondere bevorzugt sind α-Methoxy-ω-Amino-Oxyethylen-Oxypropylen-Copolymere oder α-Methoxy-ω-Amino-Polyoxyethylene. Meist bevorzugt sind α-Methoxy-ω-Amino-Polyoxyethylene. Solche Monoamin-Verbindungen **A'** sind beispielsweise erhältlich aus einer Alkohol gestartete Polymerisation von Ethylen- und/oder Propylenoxid gefolgt von Umwandlung der terminalen Alkoholgruppe in eine Amingruppe.

Die Umsetzung des Homo- oder Copolymer **P1** mit der Monohydroxy-Verbindung E erfolgt typischerweise derart, dass zum Homo- oder Copolymer **P1** unter Rühren die Monohydroxy-Verbindung **E** zugegeben wird und auf die Umsetzungstemperatur aufgeheizt wird. Die Mischung wird bei der oben beschriebenen Umsetzungstemperatur weitergerührt und eventuell unter Vakuum oder durch Über- oder Durchleiten eines Gasstromes über beziehungsweise durch die Reaktionsmasse umgesetzt. Falls Monoamin-Verbindung **A'** eingesetzt werden, kann deren Zugabe gleichzeitig mit der Monohydroxy-Verbindung **E** oder aber zu einem späteren Zeitpunkt während des ersten Reaktionsschrittes erfolgen.

Nach der Umsetzung, die mittels Messung der Säurezahl mitverfolgt werden kann, wird das Reaktionsprodukt entweder weiterverarbeitet oder gelagert. Die Lagerung kann entweder in geheizten Behältnissen oder bei Raumtemperatur erfolgen. In letzterem Fall kann das Reaktionsprodukt vor der weiteren Verwendung wieder aufgeheizt werden, vorzugsweise bis zum Schmelzen.

In diesem ersten Schritt bilden sich neben den Estern zwischen dem Homo- oder Copolymeren **P1** und der Monohydroxy-Verbindung **E** - und gegebenenfalls neben den Amiden zwischen dem Homo- oder Copolymeren **P1** und der Monoamin-Verbindung **A'** - auch Anhydridgruppen. Die Existenz dieser Anhydridgruppen kann sehr einfach mittels Infrarot-Spektroskopie bewiesen werden, da die Anhydridgruppe bekannterweise eine sehr intensive Doppel-Bande im Bereich von ~1800 cm⁻¹ und ~1760 cm⁻¹ aufweist.

Bevorzugt werden im ersten Schritt keine Amine A' verwendet.

In einem zweiten Schritt wird das im ersten Schritt gebildete Produkt, welches Anhydridgruppen neben Estergruppen und gegebenenfalls Amidgruppen aufweist, mit einer Monoamin-Verbindung **A** bei Temperaturen deutlich unter 100 °C umgesetzt. Diese Umsetzung erfolgt bevorzugt unter 60°C, insbesondere unter 40°C. Bevorzugt erfolgt die Umsetzung zwischen 10°C und 60°C, besonders bevorzugt zwischen 15 und 40°C. Diese Umsetzung ist unter schonenden Bedingungen realisierbar und bedarf keines Vakuums, so dass auch Monoamin-Verbindungen **A** mit einem tiefen Siedepunkt oder aber Monoamin-Verbindungen **A**, welche zusätzlich zur Aminogruppe auch noch Hydroxylgruppen enthalten, eingesetzt werden können.

Die Monoamin-Verbindung **A-** weist bevorzugt die Formel (II) auf

R²NH-R³ (II)

Einerseits können R² und R³ zusammen einen Ring bilden, der gegebenenfalls Sauerstoff-, Schwefel- oder weitere Stickstoffatome enthält.

Beispiele für solche Monoamin-Verbindungen **A** sind insbesondere Piperidin, Morpholin, Pyrrolidin, 1,3-Thiazolidin, 2,3 -Dihydro-1,3-thiazol, , Imidazol. Besonders geeignet ist Morpholin.

Andererseits können R² und R³ unabhängig von einander eine Alkylgruppe mit 1 bis 12 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Hydroxyalkylgruppe, eine Verbindung der Formel (III), (IV) oder (V) oder H darstellen.

-R⁴-X(R⁵)ᵥ (III)

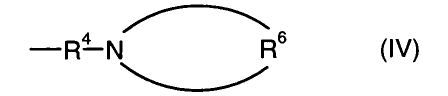

-[(EO)ₓ-(PO)_{y}-(BuO)_{z}]-R¹ (V)

R⁴ stellt hierbei eine C1- bis C4-Alkylengruppe dar. R⁵ stellt eine C₁-bis C₄-Alkylgruppe dar. X = S, O oder N, und v = 1 für X = S oder O, oder v=2 für X = N dar. R⁶ stellt eine Alkylengruppe, mit gegebenenfalls Heteroatomen, dar und bildet mit dem Stickstoffatom einen 5-er- bis 8-er-Ring, insbesondere einen 6-er-Ring. Der Substituent R¹ und die Indizes x, y und z weisen die Bedeutungen auf, wie sie bereits für die Verbindung der Formel (I) definiert wurden.

Als Hydroxyalkylgruppe bevorzugt ist die Gruppe -CH₂CH₂-OH oder -CH₂CH(OH)CH₃.

Geeignete Monoamin-Verbindung **A** sind beispielsweise Ammoniak, Butylamin, Hexylamin, Octylamin, Decylamin, Diethylamin, Dibutylamin, Dihexylamin, Cyclopentylamin, Cyclohexylamin, Cycloheptylamin und Cyclooctylamin, Dicyclohexylamin; 2-Phenyl-ethylamin, Benzylamin, Xylylamin; N,N-Dimethyl-ethylendiamin, N,N-Diethylethylendiamin, 3,3'-Iminobis(N,N-dimethylpropylamin), N,N-Dimethyl-1,3-propandiamin, N,N-Diethyl-1,3-propandiamin, N,N,N'-Trimethyl-ethylendiamin, 2-Methoxy-ethylamin, 3-Methoxy-propylamin; Ethanolamin, Isopropanolamin, 2-Aminopropanol, Diethanolamin, Diisopropanolamin, N-isopropyl-ethanolamin, N-Ethyl-ethanolamin, N-Butyl-ethanolamin, N-Methyl-ethanolamin, 2-(2-aminoethoxy)ethanol; 1-(2-Aminoethyl)-piperazin, 2-Morpholino-ethylamin, 3-Morpholino-propylamin.

Besonders bevorzugt ist die Monoamin-Verbindung **A** ausgewählt aus der Gruppe umfassend Ammoniak, Morpholin, 2-Morpholin-4-yl-ethylamin, 2-Morpholin-4-yl-propylamin, N,N-Dimethylaminopropylamin, Ethanolamin, Diethanolamin, 2-(2-aminoethoxy)ethanol, Dicyclohexylamin, Benzylamin, 2-Phenyl-ethylamin sowie Mischungen davon. Ammoniak kann als Gas oder in einer wässrigen Lösung verwendet werden. Wegen der Handhabung und aus arbeitstechnischen Vorteilen wird Ammoniak bevorzugt als wässrige Lösung eingesetzt.

Die Monoamin-Verbindung **A** kann auch ein Monoamin-Verbindung **A'** sein, auch wenn dies nicht bevorzugt ist.

Für die Umsetzung im zweiten Schritt wird ein Lösungsmittel eingesetzt. Bevorzugte Lösungsmittel sind beispielsweise Hexan, Toluol, Xylol, Methylcyclohexan, Cyclohexan oder Dioxan sowie Alkohole, insbesondere Ethanol oder Isopropanol, und Wasser, wobei Wasser das am meist bevorzugte Lösungsmittel ist.

In einer bevorzugten Ausführungsform erfolgt der zweite Schritt dadurch, dass das Amin in einem Lösungsmittel, bevorzugt Wasser, vorgelegt wird und hierzu das Produkt aus dem ersten Reaktionsschritt als Polymerschmelze oder aber in fester Form, etwa als Pulver oder in Form von Schuppen, oder eines Granulates unter Rühren zugegeben wird. Bevorzugt ist die Zugabe als Polymerschmelze. In einer weiteren bevorzugten Ausführungsform erfolgt der zweite Schritt dadurch, dass die Mischung oder Lösung aus Amin und Lösungsmittel, bevorzugt Wasser, zu der auf unter 100°C abgekühlten Polymerschmelze gegeben wird. Dieser zweite Reaktionsschritt kann direkt an den ersten Reaktionsschritt anschliessen, bei dem das Produkt bereits als Schmelze vorliegt, oder aber zu einem späteren Zeitpunkt erfolgen.

Bei Benutzung von Lösungsmittel in der zweiten Stufe kann, falls dies gewünscht ist, das Lösungsmittel wieder entfernt werden, beispielsweise durch Anlegen eines Vakuums und/oder Heizen, oder es kann noch weiter verdünnt werden.

Im zweiten Schritt können neben der Amidbildung auch Aminsalze entstehen. Um diese Aminsalzbildung zu vermindern und die Ausbeute der Amidierung zu erhöhen, können bevorzugt Alkali--oder Erdalkalihydroxide der Monoamin-Verbindung **A** beigefügt werden.

Durch das erfindungsgemässe Verfahren wird ermöglicht, dass Amid-und Estergruppen aufweisende Polymere **P** erhalten werden können, die nach dem üblichen polymeranalogen Verfahren nicht oder nur in schlechter Qualität erhalten werden können, da die für die Amidgruppen benötigten Amine zu stark flüchtig sind oder einen zu tiefen Flammpunkt oder neben der Amingruppe noch Hydroxylgruppen aufweisen. Weiterhin ermöglicht es dieses Verfahren den Gehalt an Carbonsäure-Gruppen - und damit die Ionendichte im Polymer-Hauptkette - sehr einfach zu reduzieren ohne erhöhte thermische Belastung und damit ohne Gefahr der Polyetherspaltung, welche zu einer unerwünschten Vernetzung der Polymere führen würde. Wird die Reduktion der Ionendichte im üblichen polymeranalogen Verfahren versucht, beispielsweise durch Erhöhung der Estergruppen, kommt es ab einem bestimmten Veresterungsgrad zu einer sterischen Hinderung, welche die weitere Umsetzung erschwert, bis gar verunmöglicht. Je nach Menge und Art der Monoamin-Verbindung **A** können unterschiedliche Eigenschaften des Endproduktes erzielt werden. Es ist deshalb ein weiterer Vorteil des erfindungsgemässen Verfahrens, dass ausgehend von einem Zwischenprodukt, d.h. dem Reaktionsprodukt des ersten Schrittes, einfach und kosteneffizient durch Verwendung unterschiedlicher Monoamin-Verbindungen oder unterschiedlicher Mengen der Monoamin-Verbindung **A** mehrere unterschiedliche Amid- und Estergruppen aufweisenden Polymere **P** hergestellt werden können. Dies hat grosse logistische sowie finanzielle Vorteile.

In einer bevorzugten Ausführungsform weist das Amid- und Estergruppen aufweisende Polymer **P** im wesentlichen die Struktur nach Formel (III) auf

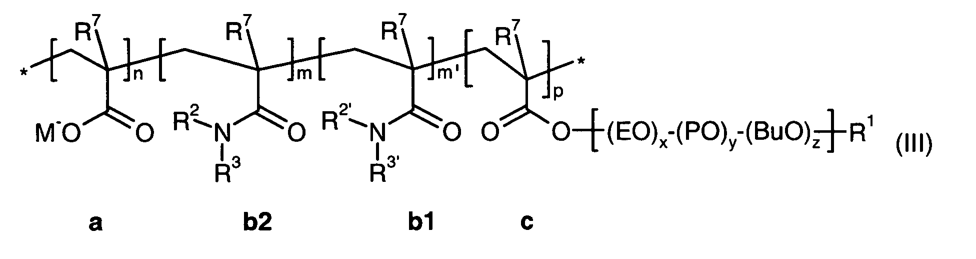

M stellt hierbei ein Kation, insbesondere H⁺, Na⁺, Ca⁺⁺/2, Mg⁺⁺/2, NH₄⁺ oder ein organisches Ammonium dar. Es ist dem Fachmann klar, dass bei den mehrwertigen Ionen ein weiteres Gegenion vorhanden sein muss, das unter anderem auch ein Carboxylat desselben oder eines anderen Moleküls des Polymeren **P** sein kann. Die organischen Ammoniumverbindungen sind insbesondere Tetraalkylammonium oder aber HR₃N⁺, wobei R eine Alkylgruppe insbesondere eine C1- bis C6-Alkylgruppe, bevorzugt Ethyl oder Butyl, darstellt. Organische Ammoniumionen werden insbesondere durch die Neutralisation der Carboxylgruppe mit handelsüblichen teritären Aminen erhalten.

Die Substituenten R⁷ bedeuten unabhängig voneinander ein H oder Methyl. Methyl wird bevorzugt als Substituent R⁷.

Die Substituenten R² und R³ sind bereits bei der Monoamin-Verbindung **A** der Formel (II) beschrieben worden. Die Substituenten R^{2'} und R^{3'} sind bereits bei der Monoamin-Verbindung **A'** der Formel (II') beschrieben worden. Die Substituenten R¹, EO ,PO, BuO sowie die Indizes x, y und z wurden bereits für die Monohydroxy-Verbindung **E** der Formel (I) beschrieben.

Die Indizes n, m, m' und p bedeuten ganze Zahlen, wobei die Summe n+m+m'+p = 10 - 250, bevorzugt 20 -100, insbesondere 25- 80, ist und n>0, m>0 und p>0 und m' ≥ 0 bedeuten.

Die Abfolge der drei Bausteine **a, b1, b2** und **c** kann blockweise oder zufällig sein, mit der Ausnahme, dass durch den Anhydridmechanismus der Amidbildung der Baustein **b2** benachbart zu oder in der Nähe von, insbesondere benachbart zu, **a** sein muss.

Das Verhältnis von **a : b1 : b2 : c** ist hierbei (0.1 - 0.9) : (0 - 0.06) : (0.001 - 0.4) : (0.099-0.899), mit den folgenden Randbedingungen, dass die Summe von **a+b1+b2+c** den Wert 1 bildet und dass das Verhältnis von b2/a > 0 und ≤ 1 darstellt.

In einer bevorzugten Ausführungsform wird eine Polymethacrylsäure mit einem Polyethylenglykol welches einseitig mit einer Methoxygruppe abgeschlossen ist, verestert und anschliessend schonend mit Mono- oder Diethanolamin umgesetzt.

Das Amid- und Estergruppen aufweisende Polymer **P** findet in unterschiedlichen Bereichen Anwendung, insbesondere in der Beton- und Zementtechnologie. Insbesondere kann das Amid- und Estergruppen aufweisende Polymer **P** als Verflüssiger für hydraulisch abbindende Zusammensetzungen, insbesondere Beton und Mörtel, eingesetzt werden. Hierbei kann das Amid- und Estergruppen aufweisende Polymer **P** einer Trockenmischung enthaltend mindestens eine hydraulisch abbindende Substanz, beigemischt werden. Als hydraulisch abbindende Substanz können grundsätzlich alle dem Beton-Fachmann bekannten Substanzen verwendet werden. Insbesondere handelt es sich hier um Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen sind Gips, in Form von Anhydrit oder Halbhydrat oder gebrannter Kalk. Als hydraulischen abbindende Substanz wird Zement, bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte MelaminFormaldehyd-Kondensate oder Polycarboxylatether, Beschleuniger, Korrosionsinhibitoren, Verzögerer, Schwindreduzierer, Entschäumern, Porenbildner möglich.

Falls das Amid- und Estergruppen aufweisende Polymer **P** in einer wasserfreien Form vorliegt, kann das Amid- und Estergruppen aufweisende Polymer **P** ein Bestandteil einer hydraulisch abbindenden Zusammensetzung, einer sogenannten Trockenmischung, sein, die über längere Zeit lagerfähig ist und typischerweise in Säcken abgepackt oder in Silos gelagert wird und zum Einsatz kommt.

Das Amid- und Estergruppen aufweisende Polymer **P** kann auch einer üblichen hydraulisch abbindenden Zusammensetzung mit oder kurz vor oder kurz nach der Zugabe des Wassers beigegeben werden. Als besonders geeignet gezeigt hat sich hierbei die Zugabe des Amid- und Estergruppen aufweisenden Polymers **P** in Form einer wässrigen Lösung oder Dispersion, insbesondere als Anmachwasser oder als Teil des Anmachwassers.

Das Amid- und Estergruppen aufweisende Polymer **P** verfügt über Eigenschaft als Verflüssiger für hydraulisch abbindende Zusammensetzungen, insbesondere zementöse Zusammensetzungen, das heisst, dass bei in der Zement- und Betontechnologie üblichen Wasser/Zement-(W/Z-)Verhältnissen die resultierende Mischung eine bedeutend grösseres Fliessverhalten aufweist im Vergleich zu einer Zusammensetzung ohne den Verflüssiger. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten hydraulisch abbindenden Zusammensetzung stark erhöht sind.

### Beispiele

### Beispielserie 1

### 1. Schritt:Veresterung/Amidierung und Anhydridbildung

In einem Reaktionsgefäss mit Rührer, Thermometer, Vakuumanschluss und Destillationseinrichtung werden 960 g einer 40%igen wässrigen Lösung einer Polymethacrylsäure mit einem mittleren Molekulargewicht von 5000 g/mol vorgelegt. Unter Rühren werden 10 g 50%-ige Schwefelsäure und 16 g eines Copolymers von Ethylenoxid und Propylenoxid im EO/PO-Verhältnis von 70:30 und mit einem Molekulargewicht M_{w} von 2000 g/mol, welches einseitig eine Methoxygruppe und auf der anderen Seite eine primäre Aminogruppe aufweist, zugegeben. 1200 g eines einseitig mit einer Methoxygruppe endgruppenverschlossenen Polyethylenglykols mit einem mittleren Molekulargewicht von 1100 g/mol werden als Schmelze zugegeben und die Reaktionsmischung unter Rühren langsam auf 160°C erwärmt. Dabei wird Wasser kontinuierlich abdestilliert. Sobald das Reaktionsgemisch 160°C erreicht hat, wird 30 min. bei dieser Temperatur gerührt und weiterhin Wasser abdestilliert. Nun werden 16 g 50%-ige NaOH zugegeben und die Temperatur auf 165°C erhöht. Unter Vakuum (80 mbar) wird 3 Stunden verestert. Die direkte Säurezahl wurde mit 1.04 mmol COOH/g Polymer bestimmt. Das geschmolzene Polymer wird abgefüllt und bei 60°C im Ofen gelagert. Bezeichnung: **BP1.**

Ein Teil des Polymers wird in Wasser gelöst und eine 40% ige Lösung hergestellt und als Vergleichs-Polymerlösung **CP1-0** bezeichnet.

### 2. Schritt: schonende Amidierung

60 g einer wässrigen Ammoniak-Lösung von ca. 20-25°C mit der in Tabelle 1 angegebenen Konzentration werden in einem Becherglas vorgelegt und unter Rühren 40 g der Polymerschmelze **BP1** mit einer Temperatur von ca. 60°C zugegeben. Die Mischung wird 2 Stunden gerührt, gelöst und amidiert.

**Tabelle 1.**

| Auf Reaktionsprodukt **BP1** des ersten Schrittes basierende erfindungsgemässe Beispiele. | | |
|---|---|---|
| Ammoniak-Lösung | | Reaktionsprodukt |
| Wasser [g] | Ammoniak (25%ig) [g] | |
| 58 | 2 | **BP1-2A** |
| 56 | 4 | **BP1-4A** |
| 54 | 6 | **BP1-6A** |
| 52 | 8 | **BP1-8A** |
| 50 | 10 | **BP1-10A** |
| 48 | 12 | **BP1-12A** |

### Beispielserie 2

### 1. Schritt:Veresterung und Anhydridbildung

In einem Reaktionsgefäss mit Rührer, Thermometer, Vakuumanschluss und Destillationseinrichtung werden 480 g einer 40%igen wässrigen Lösung einer Polymethacrylsäure mit einem mittleren Molekulargewicht von 5000 g/mol vorgelegt. Unter Rühren werden 5 g 50%-ige Schwefelsäure zugegeben. 300 g eines einseitig mit einer Methoxygruppe endgruppenverschlossenen Polyethylenglykols mit einem mittleren Molekulargewicht von 1100 g/mol und 600 g eines einseitig mit einer Methoxygruppe endgruppenverschlossenen Polyethylenglykols mit einem mittleren Molekulargewicht von 3000 g/mol werden als Schmelze zugegeben und die Reaktionsmischung unter Rühren langsam auf 170°C erwärmt. Dabei wird Wasser kontinuierlich abdestilliert. Sobald das Reaktionsgemisch 170°C erreicht hat, wird 30 min. bei dieser Temperatur gerührt. Anschliessend wird unter Vakuum (80-100 mbar) 3.5 Stunden weiter verestert. Die direkte Säurezahl am Ende der Reaktionszeit wurde mit 0.67 mmol COOH/g Polymer bestimmt. Das geschmolzene Polymer wird abgefüllt und bei 60°C gelagert. Bezeichnung: **BP2**.

Ein Teil des Polymers wird in Wasser gelöst und eine 40%-ige Lösung hergestellt und als Vergleichs-Polymerlösung **CP2-0** bezeichnet.

### 2. Schritt: schonende Amidierung

### a) Umsetzung mit Ethanolamin

Ethanolamin wird mit 50 g Wasser von ca. 20°C gemischt. Anschliessend wird die entsprechende Menge der Polymerschmelze **BP2** unter Rühren eingemischt und gelöst. Die Lösung wird 24 Stunden bei Raumtemperatur gerührt und auf 40% Feststoffgehalt verdünnt.

**Tabelle 2.**

| Auf Reaktionsprodukt **BP2** des ersten Schrittes und Ethanolamin basierende erfindungsgemässe Beispiele. | | | |
|---|---|---|---|
| **BP2** (Schmelze) [g] | H₂O [g] | Ethanolamin [g] | Reaktionsprodukt |
| 51 | 50 | 0.185 | **BP2-2EA** |
| 51.7 | 50 | 0.47 | **BP2-5EA** |
| 51.5 | 50 | 0.936 | **BP2-10EA** |
| 51.35 | 50 | 1.373 | **BP2-15EA** |
| 50.18 | 50 | 1.825 | **BP2-20EA** |

### b) Umsetzung mit Dicyclohexylamin

Dicyclohexylamin wird mit 50 g Wasser von ca. 40°C gemischt. Anschliessend wird die entsprechende Menge der Polymerschmelze **BP2** unter Rühren eingemischt und gelöst. Die Lösung wird 24 Stunden bei Raumtemperatur gerührt und auf 40% Feststoffgehalt verdünnt.

**Tabelle 3.**

| Auf Reaktionsprodukt **BP2** des ersten Schrittes und Dicyclohexylamin basierende erfindungsgemässe Beispiele. | | | |
|---|---|---|---|
| **BP2** (Schmelze)[g] | H₂O [g] | Dicyclohexylamin [g] | Reaktionsprodukt |
| 50.62 | 50 | 0.184 | **BP2-2DCHA** |
| 52.87 | 50 | 0.961 | **BP2-10DCHA** |

### c) Umsetzung mit 2-Phenylethylamin

2-Phenylethylamin wird mit 50 g Wasser von ca. 40°C gemischt. Anschliessend wird diese Mischung in die entsprechende Menge der Polymerschmelze **BP2**, die eine Temperatur von 80°C hat, unter Rühren eingemischt. Die Mischung wird 5 Stunden gerührt und es wird eine klare Lösung erhalten. Die Lösung wird auf 40% Feststoffgehalt verdünnt.

**Tabelle 4.**

| Auf Reaktionsprodukt **BP2** des ersten Schrittes und 2-Phenylethylamin basierendes erfindungsgemässe Beispiel. | | | |
|---|---|---|---|
| **BP2** (Schmelze) [g] | H₂O [g] | Phenylethylamin [g] | Reaktionsprodukt |
| 51.48 | 50 | 0.918 | **BP2-10PEA** |

### Beispielserie 3

### 1. Schritt: Veresterung und Anhydridbildung

In einem Reaktionsgefäss mit Rührer, Thermometer, Vakuumanschluss und Destillationseinrichtung werden 383 g einer 50%igen wässrigen Lösung einer Polyacrylsäure mit einem mittleren Molekulargewicht von 4000 und einem pH- Wert von 3.4 vorgelegt. Unter Rühren werden 17 g 50%-ige Schwefelsäure zugegeben. 600 g eines einseitig mit einer Methoxygruppe endgruppenverschlossenen Polyethylenglykols mit einem mittleren Molekulargewicht von 1000 g/mol werden als Schmelze zugegeben und die Reaktionsmischung unter Rühren langsam auf 170°C erwärmt. Dabei wird Wasser kontinuierlich abdestilliert. Sobald das Reaktionsgemisch 170°C erreicht hat, wird 30 min. bei dieser Temperatur gerührt. Anschliessend wird unter Vakuum (100-200 mbar) 3 Stunden bei 175°C weiter verestert. Die direkte Säurezahl am Ende der Reaktionszeit wurde mit 1.9 mmol COOH/g Polymer bestimmt. Das geschmolzene Polymer wird abgefüllt und bei 60°C gelagert. Bezeichnung: **BP3.**

Ein Teil des Polymers wird in Wasser gelöst und eine 40%-ige Lösung hergestellt und als Vergleichs-Polymerlösung **CP3-0** bezeichnet.

### 2. Schritt: schonende Amidierung

Ethanolamin in einer Menge gemäss Tabelle 5 wird mit 50 g Wasser von ca. 20°C gemischt. Anschliessend wird die entsprechende Menge der Polymerschmelze **BP3** unter Rühren eingemischt und gelöst. Die Lösung wird 2 Stunden bei 40°C gerührt.

**Tabelle 5.**

| Auf Reaktionsprodukt **BP3** des ersten Schrittes und Ethanolamin basierende erfindungsgemässe Beispiele. | | | |
|---|---|---|---|
| **BP3** (Schmelze) [g] | H₂O [g] | Ethanolamin [g] | Reaktionsprodukt |
| 51 | 50 | 0.31 | **BP3-2EA** |
| 50 | 50 | 0.76 | **BP3-5EA** |
| 54 | 50 | 1.64 | **BP3-10EA** |
| 52 | 50 | 2.38 | **BP3-15EA** |
| 53 | 50 | 3.21 | **BP3-20EA** |

### Vergleichsbeispiel bei dem das Ethanolamin im ersten Reaktionsschritt zugegeben wird.

Die Reaktion wird analog dem 1. Schritt aus Beispielserie 2 durchgeführt, nur werden gleichzeitig mit der Zugabe der einseitig engruppenverschlossenen Polyethylenglykole 37 g Ethanolamin zugegeben. Während des Aufheizens und Abdestillieren des Wassers wird die Reaktionsmischung inhomogen und viskos, bei 120°C geliert die Mischung. Die Reaktion wird abgebrochen. Eine homogene Lösung des Polymeren kann nicht hergestellt werden.

### Vergleichsbeispiele:Salzbildung

Die Polymerschmelze wird in 70 g Wasser gelöst und 2 Tage bei 60° C stehen gelassen. Anschliessend wird eine Menge des jeweiligen Amins gemäss Tabelle 5 zugegeben.

**Tabelle 6.**

| Auf Reaktionsprodukt **BP2** oder **BP3** des ersten Schrittes basierende Vergleichsbeispiele. | | | | | |
|---|---|---|---|---|---|
| Polymer | Polymer Menge[g] | H₂O [g] | Amin | Amin Menge[g] | Reaktionsprodukt |
| **BP2** | 30 | 70 | Ethanolamin | **0.546** | **CP2-EA-Salz** |
| **BP2** | 22 | 50 | Dicycohexylamin | **0.40** | **CP2-DCH-Salz** |
| **BP2** | 22 | 50 | 2-Phenylethylamin | **0.40** | **CP2-PEA-Salz** |
| **BP3** | 50 | 70 | Ethanolamin | **1.53** | **CP3-EA-Salz** |

### Beispielshafte hvdraulisch abbindende Zusammensetzungen

Die Wirksamkeit der erfindungsgemässen Polymeren wurde im Mörtel getestet.

**Tabelle 7.**

| Zusammensetzung der benutzten Mörtelmischungen. | |
|---|---|
| Mörtelmischung 1: **MM1** (Grösstkorn 8mm) | Menge |
| Zement (Schweizer CEM I 42.5) | 750 g |
| Kalksteinfiller | 141 g |
| Sand 0-1 mm | 738 g |
| Sand 1-4 mm | 1107 g |
| Sand 4-8 mm | 1154 g |
| | |
| | |

| Mörtelmischung 1: **MM2** (Grösstkorn 3mm) | Menge |
|---|---|
| Zement(Schweizer CEM I 42.5) | 880 g |
| Kalksteinfiller | 320 g |
| Quarzsand 0.08-0.2 mm | 180 g |
| Quarzsand 0.1-0.5 mm | 280 g |
| Quarzsand 0.3-0.9 mm | 370 g |
| Quarzsand 0.7-1.2 mm | 440 g |
| Quarzsand 1.5-2.2 mm | 630 g |
| Quarzsand 2.0-3.2 mm | 800 g |

Die Sande, der Filler und der Zement wurden 1 Minute in einem Hobart-Mischer trocken gemischt. Innerhalb von 30 Sekunden wird das Anmachwasser, in dem das Polymer gelöst ist, zugegeben und noch weitere 2.5 Minuten gemischt. Die Gesamt-Mischzeit nass ist 3 Minuten.

Alle Polymerlösungen wurden vor dem Mörteltest mit der gleichen Menge eines Entschäumers versehen.

### Messmethoden und Resultate

### -direkte Säurezahl

Ca. 1 g der Polymerschmelze wird in ca. 30 ml deionisiertem Wasser gelöst und mit 3 Tropfen einer Phenolphthaleinlösung (1 % in Ethanol) versetzt. Mit 0.1 N NaOH wird bis zum Farbumschlag titriert.
Säurezahl in mmol COOH/g = *V*/ (10 x *m*)
*V*=Verbrauch an 0.1 N NaOH in ml und *m*=Einwaage der Polymerschmelze in g

### -Ausbreitmass

Das Ausbreitmass des Mörtels wurde gemäss EN 1015-3 bestimmt.

### -Luftgehalt

Der Luftgehalt des Mörtels wurde entsprechend EN 196-1 bestimmt.

### -Abbinde-Ende

Die Abbindezeit wurde mittels der Temperatur-Entwicklung in einem mit Mörtel gefüllten Styropor-Kessel von ca. 1I Inhalt bestimmt. Als Abbinde-Ende wurde die Zeit, bei welcher die Temperaturkurve den maximalen Wert aufweist, definiert.

### -Druckfestigkeit

Die Druckfestigkeit der erhärteten Mörtel-Prismen wurde gemäss EN 196-1 bestimmt.

### Resultate

Tabelle 8 zeigt deutlich den Vorteil der erfindungsgemässen Polymeren gegenüber dem Vergleichsbeispiel. Während sich die Verarbeitbarkeit des Mörtels mit dem Polymer des Vergleichsbeispiels deutlich mit der Zeit verschlechtert (das Ausbreitmass nimmt ab), nimmt diejenige der Mörtel mit den erfindungsgemässen Polymeren innerhalb von 90 Minuten kaum ab, im Gegenteil, sie nimmt bei einigen sogar mit der Zeit zu. Dies ist deutlich an dem tiefen, teilweise sogar negativen Wert für Δ₀₋₉₀ zu sehen.

Tabelle 9 und 10 zeigen ebenfalls das ausgezeichnete Halten der Verarbeitbarkeit über 90 Minuten von Mörteln mit den erfindungsgemässen Polymeren, während Mörtel mit den Vergleichspolymeren deutlich an Verarbeitbarkeit verlieren. Die 24-Stunden Druckfestigkeit der Mörtelprismen, welche die erfindungsgemässen Polymeren enthalten, sind gleich wie die der Mörtelprismen mit den Vergleichspolymeren, obwohl die Dosierung der Vergleichspolymeren tiefer ist. Das heisst, dass die erfindungsgemässen Polymere das Abbinden der Mörtel weniger verzögern, als die Vergleichspolymere.

Diese Beispiele zeigen deutlich, dass die erfindungsgemässen Polymeren die in vielen Anwendungen geforderte lange Verarbeitbarkeit von Mörtel- oder Betonmischungen erfüllen, ohne den oft bei solchen Polymeren gefundenen Nachteil der verminderten 24-Stunden-Festigkeit zu haben.

Weiter zeigen diese Mörtelresultate, dass bei der Umsetzung in der zweiten Reaktionsstufe eine Amidierung stattfindet. Die Eigenschaften der erfindungsgemässen Polymeren unterscheiden sich bezüglich des Haltens der Verarbeitbarkeit der Mörtelmischung deutlich von denen der Ausgangspolymere und der Amin-Salze.

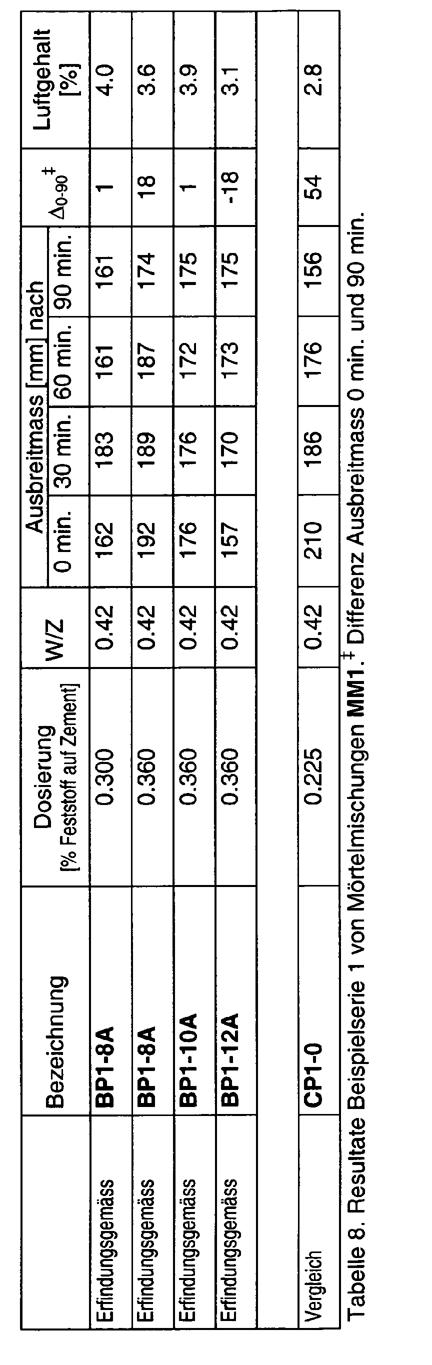

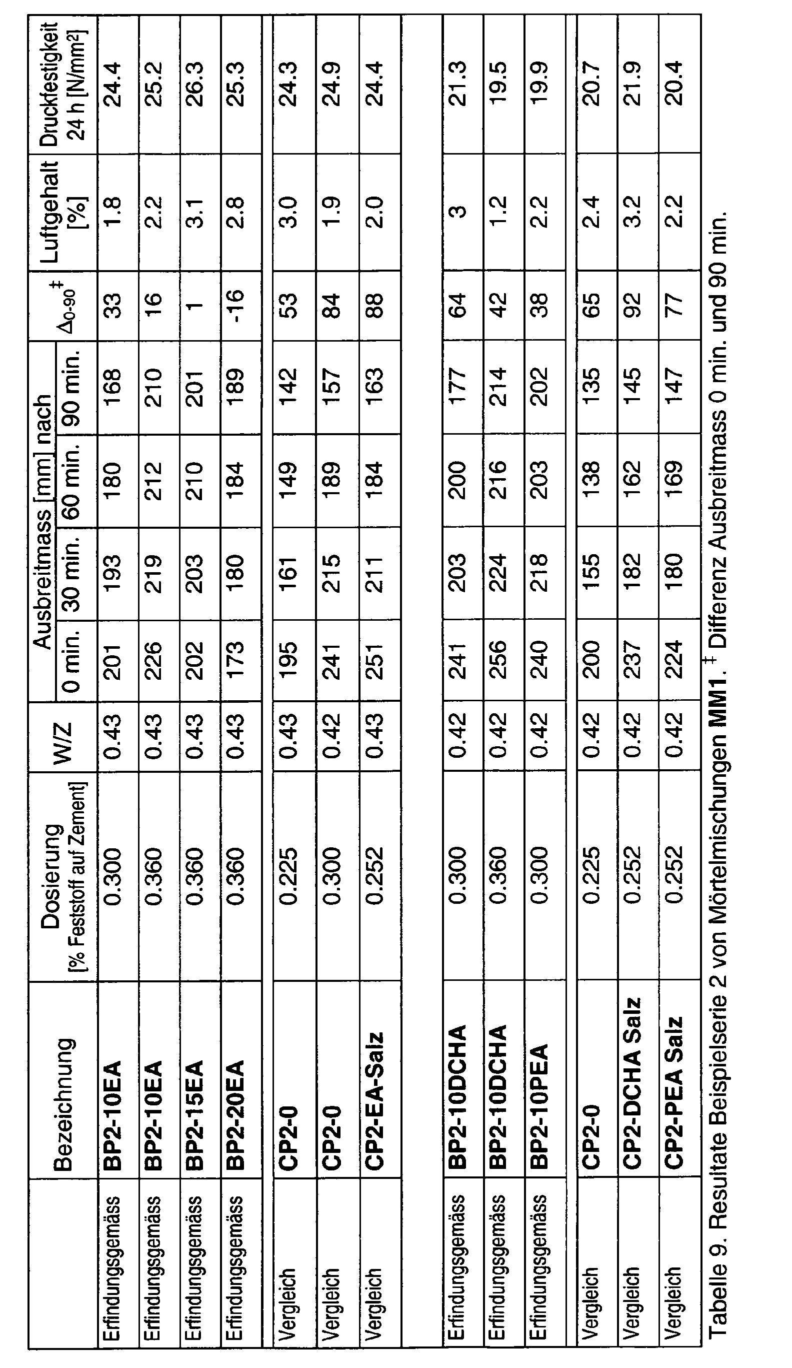

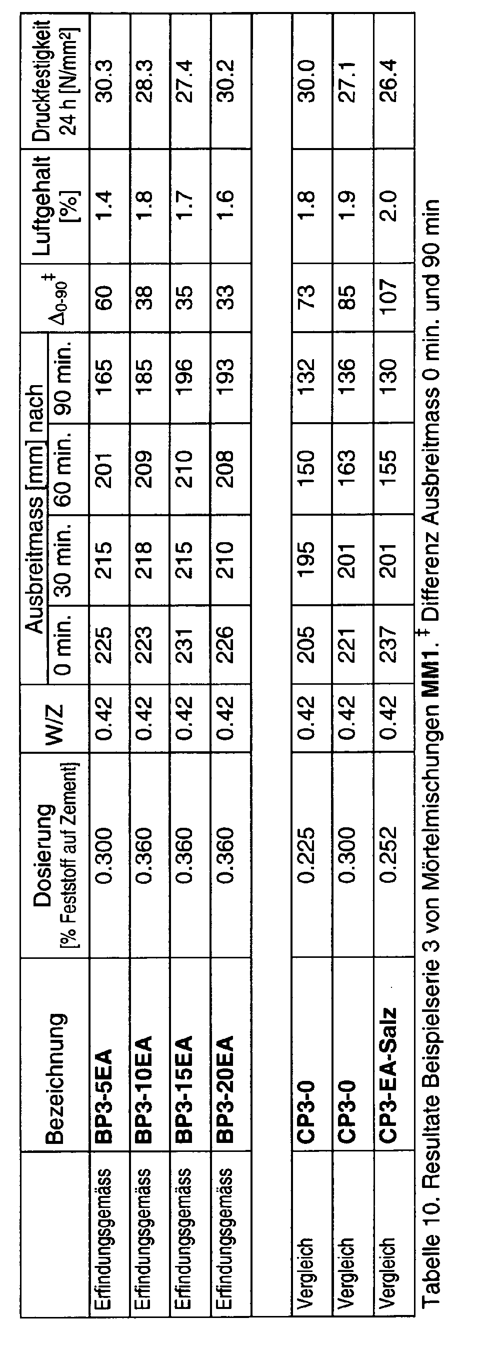

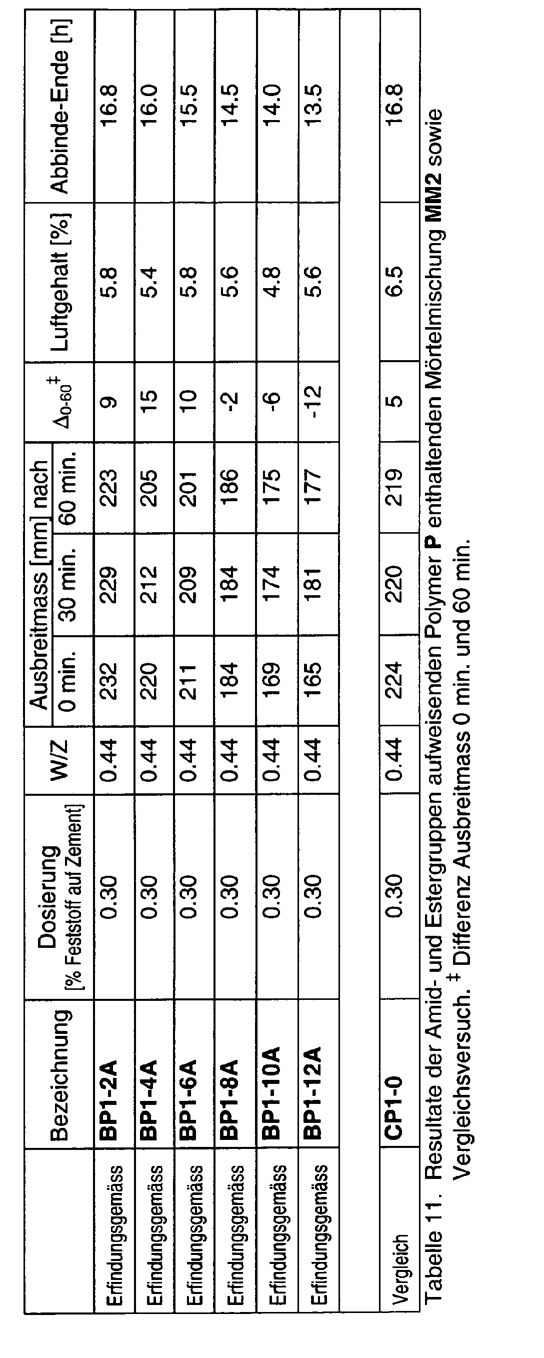

## Patentansprüche

1. Verfahren der Herstellung eines Amid- und Estergruppen aufweisenden Polymers **P**, **dadurch gekennzeichnet, dass**
in einem ersten Schritt ein Homo- oder Copolymer **P1** von (Meth)acrylsäure mit einer Monohydroxy-Verbindung **E** bei einer Temperatur bis 200°C umgesetzt wird, so dass neben Estergruppen Anhydridgruppen entstehen,
und in einem zweiten Schritt die im ersten Schritt gebildeten Anhydridgruppen mit einer Monoamin-Verbindung **A** bei Temperaturen deutlich unter 100 °C zum Amid umgesetzt werden.

2. Verfahren gemäss Anspruch 1, **dadurch gekennzeichnet, dass** der erste Schritt in Gegenwart einer Säure, insbesondere Schwefelsäure, p-Toluolsulfonsäure, Benzolsulfonsäure, Methansulfonsäure, Phosphorsäure oder phosphorige Säure, bevorzugt Schwefelsäure, erfolgt.

3. Verfahren gemäss Anspruch 1 oder 2, **dadurch gekennzeichnet, dass** die Monohydroxy-Verbindung **E** ein C6- bis C20-Alkylalkohol ist oder die Formel (I) aufweist
HO-[(EO)ₓ-(PO)_{y}-(BuO)_{z}]-R¹ (I)
wobei x, y, z unabhängig voneinander je die Werte 0 - 250 aufweisen und x+y+z = 3 - 250 ist;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz;
und R¹= Alkylgruppe mit 1-20 Kohlenstoffatomen oder Alkylarylgruppe mit 7 - 20 Kohlenstoffatomen bedeuten.

4. Verfahren gemäss Anspruch 3, **dadurch gekennzeichnet, dass** z = 0 und R¹ = Methyl-, Ethyl-, i-Propyl- oder n-Butylgruppe ist.

5. Verfahren gemäss Anspruch 3 oder 4, **dadurch gekennzeichnet, dass** die Monohydroxy-Verbindung **E** ein einseitig endgruppenverschlossenes Polyalkylenglykol mit einem Molekulargewicht M_{w} von 300 bis 10'000 g/mol, insbesondere von 500 bis 5000 g/mol, bevorzugt von 800 bis 3000 g/mol, ist.

6. Verfahren gemäss einem der Ansprüche 1 bis 5, **dadurch gekennzeichnet, dass** das Homo- oder Copolymer **P1** von (Meth)acrylsäure durch Homopolymerisation von (Meth)acrylsäure oder durch Copolymerisation von (Meth)acrylsäure mit mindestens einem weiteren Monomer ausgewählt aus der Gruppe umfassend α- β-ungesättigte Carbonsäuren, α- β-ungesättigte Carbonsäureestern, α- β-ungesättigte Carboxylate, Styrol, Ethylen, Propylen, Vinylacetat sowie Mischungen davon hergestellt ist.

7. Verfahren gemäss Anspruch 6, **dadurch gekennzeichnet, dass** das weitere Monomer ausgewählt ist aus der Gruppe umfassend Methacrylsäure, Acrylsäure, Crotonsäure, Itaconsäure, Maleinsäure, Fumarsäure, sowie deren Salze, Ester und Mischungen.

8. Verfahren gemäss einem der vorhergehenden Ansprüche, **dadurch gekennzeichnet, dass** das Copolymer **P1** ein Copolymer ist aus Acrylsäure und Methacrylsäure sowie deren Salze oder Teilsalze; oder das Homopolymer **P1** eine Polymethacrylsäure oder Polyacrylsäure, bevorzugt eine Polymethacrylsäure, ist, deren Salze oder Teilsalze.

9. Verfahren gemäss einem der vorhergehenden Ansprüche, **dadurch gekennzeichnet, dass** das Homo- oder Copolymer **P1** von (Meth)acrylsäure durch eine radikalische Polymerisation in Gegenwart von mindestens einem Molekulargewichtsregler, insbesondere einer Schwefelverbindung oder einer Phosphorverbindung hergestellt wird.

10. Verfahren gemäss einem der vorhergehenden Ansprüche, **dadurch gekennzeichnet, dass** das Homo- oder Copolymer **P1** ein Homo- oder Copolymer ist, welches aus 10 bis 250, bevorzugt 20 bis 100, insbesondere 25 bis 80, Monomerbausteinen aufgebaut ist.

11. Verfahren gemäss einem der vorhergehenden Ansprüche, **dadurch gekennzeichnet, dass** die Monoamin-Verbindung **A** ein Amin der Formel (II)
R²NH-R³ (II)
ist, wobei
R² und R³ zusammen einen Ring bilden, der gegebenenfalls Sauerstoff-, Schwefel- oder weitere Stickstoffatome enthält;
oder wobei R² und R³ unabhängig von einander eine Alkylgruppe mit 1 bis 12 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Hydroxyalkylgruppe, insbesondere -CH₂CH₂-OH oder -CH₂CH(OH)CH₃, eine Verbindung der Formel (III), (IV) oder (V) oder H darstellen
-R⁴-X(R⁵)ᵥ (III) 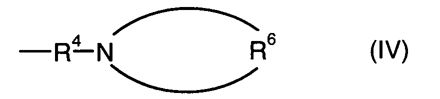
-[(EO)ₓ-(PO)_{y}-(BuO)_{z}]-R¹ (V)
wobei R⁴ eine Alkylengruppe und R⁵ eine C₁- bis C₄-Alkylgruppe darstellen und X ein S, O oder N darstellt, und v = 1 für X = S oder O, oder v=2 für X=N ist; und R⁶ eine Alkylengruppe mit gegebenenfalls Heteroatomen ist;
x, y, z unabhängig voneinander je die Werte 0 - 250 aufweisen und x+y+z = 3 - 250 ist;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz;
und R¹= Alkylgruppe mit 1-20 Kohlenstoffatomen oder Alkylarylgruppe mit 7 - 20 Kohlenstoffatomen bedeuten.

12. Verfahren gemäss Anspruch 11, **dadurch gekennzeichnet, dass** Verbindung **A** ausgewählt ist aus der Gruppe umfassend Ammoniak, Morpholin, 2-Morpholin-4-yl-ethylamin, 2-Morpholin-4-yl-propylamin, N,N-Dimethylaminopropylamin, Ethanolamin, Diethanolamin, 2-(2-amino-ethoxy)ethanol, Dicyclohexylamin, Benzylamin, 2-Phenyl-ethylamin sowie Mischungen davon

13. Verfahren gemäss einem der vorhergehenden Ansprüche, **dadurch gekennzeichnet, dass** im ersten Schritt zusätzlich zur Monohydroxy-Verbindung **E** eine Monoamin-Verbindung **A'** eingesetzt wird.

14. Verfahren gemäss Anspruch 13, **dadurch gekennzeichnet, dass** die Monoamin-Verbindung **A'** ein Amin der Formel (II')
R^{2'}NH-R^{3'} (II')
ist, wobei
R^{2'} und R^{3'} zusammen einen Ring bilden, der gegebenenfalls Sauerstoff-, Schwefel- oder weitere Stickstoffatome enthält;
oder wobei R^{2'} und R^{3'} unabhängig von einander eine Alkylgruppe mit 8 bis 20 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Verbindung der Formel (III'), (IV') oder (V') oder H darstellen
-R^{4'}-X(R^{5'})ᵥ (III') 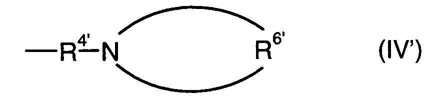
-[(EO)ₓ-(PO)_{y}-(BuO)_{z}]-R¹ (V')
wobei R^{4'} eine Alkylengruppe und R^{5'} eine C₁- bis C₄-Alkylgruppe darstellen und X ein S, O oder N darstellt, und v = 1 für X = S oder O, oder v=2 für X = N ist; und R^{6'} eine Alkylengruppe, mit gegebenenfalls Heteroatomen ist,
x, y, z unabhängig voneinander je die Werte 0 - 250 aufweisen und x+y+z = 3 - 250 ist;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz;
und R¹= Alkylgruppe mit 1-20 Kohlenstoffatomen oder Alkylarylgruppe mit 7 - 20 Kohlenstoffatomen bedeuten.

15. Verfahren gemäss Anspruch 14, **dadurch gekennzeichnet, dass** die Verbindung **A'** der Formel (II') die Substituenten R^{2'} der Formel (IV') und R^{3'} gleich H aufweist und insbesondere ein α-Methoxy- w -Amino-Oxyethylen-Oxypropylen-Copolymer oder ein α-Methoxy-ω-Amino-Polyoxyethylene, bevorzugt α-Methoxy-ω-Amino-Polyoxyethylene, ist.

16. Verfahren gemäss einem der vorhergehenden Ansprüche, **dadurch gekennzeichnet, dass** der zweite Schritt in einem Lösungsmittel, insbesondere in Hexan, Toluol, Xylol, Methylcyclohexan, Cyclohexan oder Dioxan oder Alkoholen oder Wasser, bevorzugt Wasser, erfolgt.

17. Verfahren gemäss einem der vorhergehenden Ansprüche, **dadurch gekennzeichnet, dass** die Temperatur des ersten Schrittes zwischen 140°C und 200°C ist und die Temperatur des zweiten Schrittes zwischen 10°C und 60°C, bevorzugt zwischen 15°C und 40°C, ist.

18. Verfahren gemäss einem der vorhergehenden Ansprüche, **dadurch gekennzeichnet, dass** das Amid- und Estergruppen aufweisendes Polymer **P** die Formel (III) aufweist 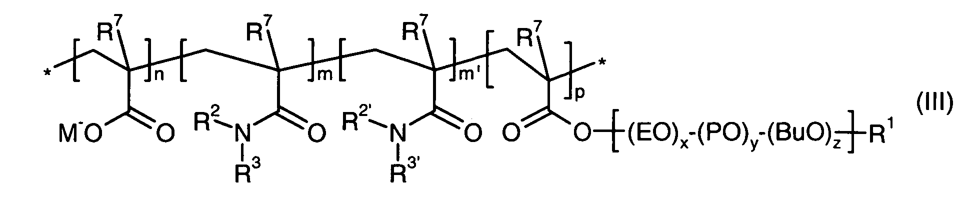 wobei M = Kation, insbesondere H⁺, Na⁺, Ca⁺⁺/2, Mg⁺⁺/2, NH₄⁺ oder ein organisches Ammonium bedeutet;
R⁷ unabhängig von einander ein H oder Methyl, insbesondere Methyl, bedeuten;
und
R² und R³ zusammen einen Ring bilden, der gegebenenfalls Sauerstoff-, Schwefel- oder weitere Stickstoffatome enthält,
oder
R² und R³ unabhängig von einander eine Alkylgruppe mit 1 bis 12 Kohlenstoffatome, eine Cycloalkyl-Gruppe mit 5 bis 9 Kohlenstoffatomen, eine Aralkyl-Gruppe mit 7 bis 12 Kohlenstoffatomen, eine Hydroxyalkylgruppe, insbesondere -CH₂CH₂-OH oder -CH₂CH(OH)CH₃, eine Verbindung der Formel (III), (IV) oder (V) oder H darstellen
-R⁴-X(R⁵)ᵥ (III) 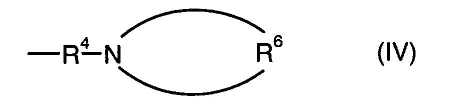
-[(EO)ₓ-(PO)_{y}-(BuO_{z}]-R¹ (V)
und
R^{2'} und R^{3'} zusammen einen Ring bilden, der gegebenenfalls Sauerstoff-, Schwefel- oder weitere Stickstoffatome enthält,
oder
R^{2'} und R^{3'} unabhängig von einander eine Alkylgruppe mit 8 bis 20 Kohlenstoffatome, eine Cycloalkyl-Gruppe mit 5 bis 9 Kohlenstoffatomen, eine Aralkyl-Gruppe mit 7 bis 12 Kohlenstoffatomen, eine Verbindung der Formel (III'), (IV') oder (V') oder H darstellen
-R^{4'}-X(R^{5'})ᵥ (III') 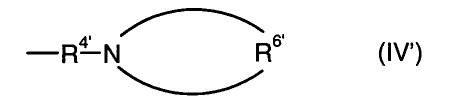
-[(EO)ₓ-(PO)_{y}-(BuO)_{z}]-R¹ (V')
und
n+m+m'+p = 10 - 250, bevorzugt 20 - 100, und n>0, m>0, p>0 und m'≥0 bedeuten,
und wobei
R⁴ und R^{4'} eine Alkylengruppe,
R⁵ und R^{5'} eine C₁- bis C₄-Alkylgruppe,
R⁶ und R^{6'} eine Alkylengruppe, mit gegebenenfalls Heteroatomen, darstellen,
X ein S, O oder N ist darstellt,
v = 1 für X = S oder O, oder v=2 für X = N,
x, y, z unabhängig voneinander je die Werte 0 - 250 aufweisen und x+y+z = 3 - 250;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz; und
R¹= Alkylgruppe mit 1-20 Kohlenstoffatomen oder Alkylarylgruppe mit 7 - 20 Kohlenstoffatomen bedeuten.

19. Amid- und Estergruppen aufweisendes Polymer **P**, **dadurch gekennzeichnet, dass** es nach einem Verfahren gemäss einem der Ansprüche 1 bis 18 hergestellt wird.

20. Amid- und Estergruppen aufweisendes Polymer **P** gemäss Anspruch 19, **dadurch gekennzeichnet, dass** das Verhältnis von **a : b1 : b2 : c** = (0.1 - 0.9) : (0 - 0.06) : (0.001 - 0.4) : (0.099-0.899) ist und wobei die Summe von **a+b1+b2+c** den Wert 1 bildet und wobei das Verhältnis von **b2/a** > 0 und ≤ 1 ist.

21. Verwendung eines Amid- und Estergruppen aufweisenden Polymers **P** gemäss Anspruch 19 oder 20 als Verflüssiger für hydraulisch abbindende Zusammensetzungen, insbesondere Beton und Mörtel.

22. Hydraulisch abbindende Zusammensetzung enthaltend mindestens ein Amid- und Estergruppen aufweisendes Polymer **P** gemäss Anspruch 19 oder 20.

23. Mit Wasser erhärtete hydraulisch abbindende Zusammensetzung enthaltend mindestens ein Amid- und Estergruppen aufweisendes Polymer **P** gemäss Anspruch 19 oder 20.

24. Verwendung eines Amid- und Estergruppen aufweisenden Polymers **P** gemäss Anspruch 19 oder 20 als Dispersionsmittel.
